# EUROPEAN PATENT SPECIFICATION

(11) **EP 3 222 918 B1**
(45) Date of publication and mention of the grant of the patent: **17.07.2019**
(21) Application number: 17162937.1
(22) Date of filing: 24.03.2017
(51) Int. Cl.: F23R 3/34, F23N 5/08, F23N 5/24

(54) **GAS-TURBINE BURNER ASSEMBLY WITH OPTICAL PROBE**
GASTURBINENBRENNERANORDNUNG MIT OPTISCHER SONDE
ENSEMBLE DE BRÛLEUR DE TURBINE À GAZ AYANT UNE SONDE OPTIQUE

(30) Priority: 25.03.2016 IT UA20162047
(43) Date of publication of application: 27.09.2017
(73) Proprietor: Ansaldo Energia S.p.A., 16152 Genova (IT)
(72) Inventor: GOTTARDO, Enrico, 16018 Mignanego (IT); BERTOLOTTO, Edoardo, 16152 Genova (IT); OZZANO, Claudia, 16149 Genova (IT)
(74) Representative: Bernotti, Andrea

(56) References cited:
- EP-A2- 2 642 205
- WO-A1-2013/061303
- GB-A- 2 458 213
- US-A1- 2012 174 590

## Description

The present invention relates to a gas turbine burner with optical probe.

In gas turbines, the possibility of having optical access to the combustion chamber to allow images to be taken during its operation could have outcomes of great importance for control and diagnostics. In particular, detecting images in the bands from the infrared to the ultraviolet can provide crucial information for pyrometry applications, for understanding the temperature distribution inside the combustion chamber, and for assessing combustion quality. It would be particularly useful to have an image detection system that would make it possible to record images of the flame region of one or more burners. This type of information could make it possible to evaluate the shape and symmetry of the flame region, the temperature distribution, the presence of irregularities for example due to a burner malfunction, and so forth. In addition, optical pyrometry measurements of the internal walls of the combustion chamber make it possible to quickly identify critical issues, such as damage to the internal thermal insulation lining.

Having optical access to the combustion chamber during operation is however extremely difficult due to the very high temperatures and the equipment needed to deal with them. Apart from the overall desirability of maintaining the integrity of the outer casing of the combustion chamber, a problem which is certainly more serious is represented by the internal thermal insulation lining, which is indispensable for protecting external structures from combustion heat and must not have breaks or discontinuities of any kind. In addition, the thermal insulation lining normally consists of a plurality of contiguous tiles and the action of making openings for optical access would require problematic modifications. Another obstacle which needs to be taken into account is represented by the need to cool the optical detection probes.

Image detection of the interior of a gas turbine combustion chamber could make important contributions to its control and diagnostics, but it is difficult to implement with the currently available instruments.

The document US 2012/174590 A1 discloses a burner assembly for a combustion chamber of a gas-turbine unit, comprising a fuel nozzle and an optical probe, housed inside the fuel nozzle and coaxial with the fuel nozzle. The optical probe comprises a tubular body having an optical window at a first end, and a portion of a waveguide housed inside the tubular body through a second end of the tubular body and extending to the optical window, the waveguide thus optically facing the flame area of the fuel nozzle. The tubular body further comprises an air intake at the second end, the air intake being configured to feed a flow of cooling air inside the tubular body.

The purpose of the present invention is therefore to provide a gas-turbine burner that allows the described limitations to be overcome or at least reduced.

According to the present invention, a burner assembly for a combustion chamber of a gas-turbine unit is provided, as defined in claim 1.

The present invention will now be described with reference to the accompanying drawings, which illustrate a not limiting embodiment thereof, wherein:
- Figure 1 is a simplified block diagram of a gas turbine for producing electricity according to one embodiment of the present invention;
- Figure 2 shows a more detailed diagram of a part of the plant in Figure 1;
- Figure 3 illustrates a graph that shows the sizes relating to the plant in Figure 1;
- Figure 4 shows a transversal section through a component of the plant in Figure 1;
- Figure 5 shows an enlarged detail of the component in Figure 4;
- Figure 6 shows an enlarged detail of the component in figure 4 in a different embodiment of the present invention.

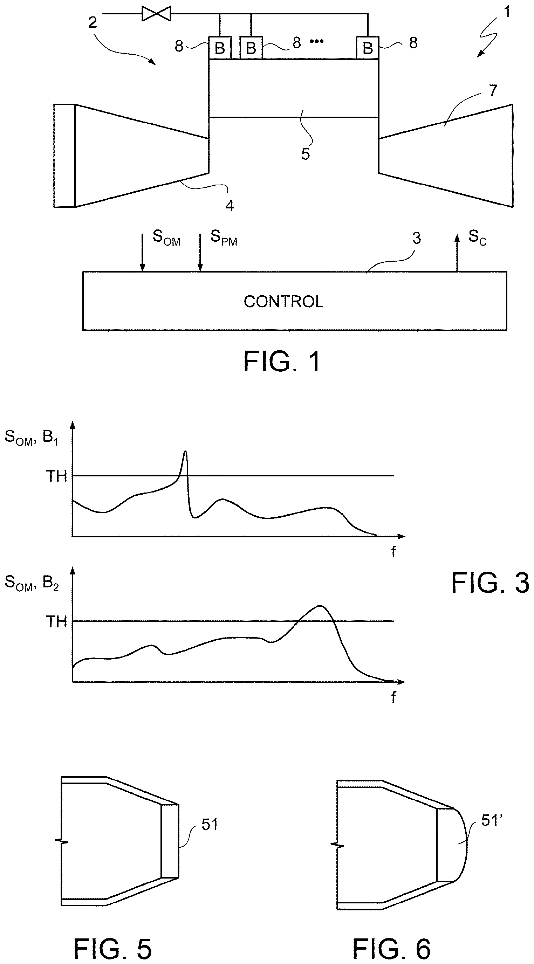

With reference to Figure 1, number 1 defines a gas-turbine plant as a whole comprising a gas-turbine unit 2 and a control system 3.

The gas-turbine unit 2, in turn, comprises a compressor 4, a combustion chamber 5 and an expansion section or turbine 7.

The axial-type compressor 4 feeds the combustion chamber 5 with a flow of air drawn from outside.

The combustion chamber 5, for example of a toroidal type, is provided with a plurality of burner assemblies 8, which cause the combustion inside the combustion chamber 5, of a mixture of air and fuel. The fuel can be gaseous, for example natural gas or syngas, or liquid, for example gasoil. The gas-turbine unit 2 can be structured to use different types of fuel, both gaseous and liquid.

The turbine 7 receives and expands the flow of combustion gases from the combustion chamber 5 to extract mechanical work, which is transferred to an external user, typically an electric generator, which is not shown here.

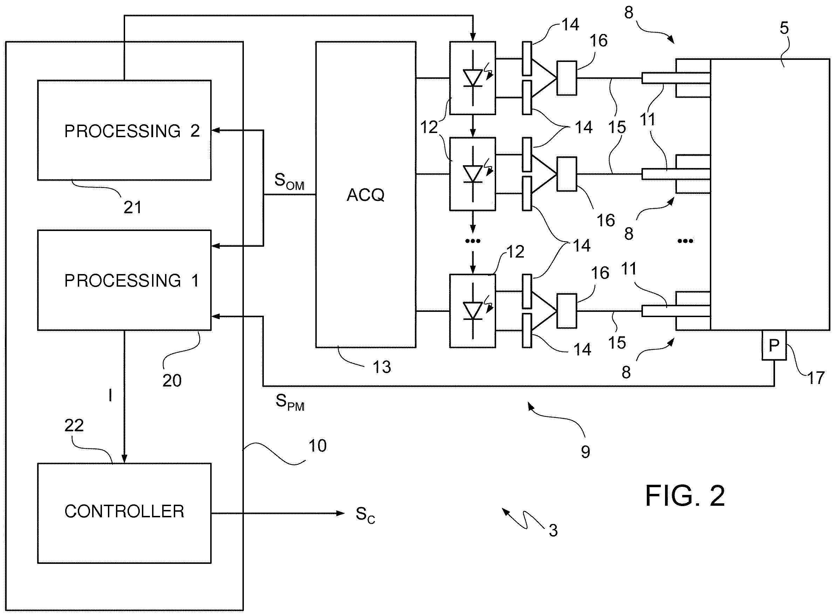

With reference to Figure 2, the control system 3 comprises a monitoring apparatus 9 and a controller 10.

The monitoring apparatus 9 is configured to monitor thermoacoustic fluctuations inside the combustion chamber 5 and, in particular, to detect light intensity fluctuations in a flame area of the combustion chamber 5.

In one embodiment, the monitoring apparatus 9 comprises a plurality of optical probes 11, optoelectronic transducers 12, an acquisition unit 13, optical filters 14 and waveguides 15, for optically coupling the optical probes 11 to respective optoelectronic transducers 12.

The optical probes 11 are arranged facing inside the combustion chamber 5, so that the flame area of a respective burner assembly 8 is visible. In one embodiment, the optical probes 11 are built into the structure of the respective burner assembly 8, as described later on in further detail.

The light radiation gathered by the optical probes 11 is carried towards the optoelectronic transducers 12 by the respective waveguides 15, which, in one embodiment, can be beams of optical fibres.

The optoelectronic transducers 12 can include photodetectors, like photodiodes, phototransistors or photomultipliers, organized into image sensors, where appropriate. Each optoelectronic transducer 12 converts signals of light intensity received by the respective waveguides 15 into electrical signals, which are collected by the acquisition unit 13. In turn, the acquisition unit 13 provides the controller 10 with optical monitoring signals S_{OM} obtained from the electrical signals from the optoelectronic transducers 12.

In one embodiment, the optical filters 14 are arranged along an optical path between the optical probes and the optoelectronic transducers 12, for example between the waveguides 15 and the respective optoelectronic transducers 12. In this case, the optical filters 14 and the respective associated optoelectronic transducers 12 define separate channels that carry signals relating to respective wavelength bands (the signals are natively optical signals subsequently converted into electrical signals). Alternatively, the optical filters can be arranged along the waveguides 15. In this case, it is possible to use different portions of waveguides downstream of optical filters 14 to make different channels. Furthermore, it is possible to convert the light intensity signals of the different channels with special optoelectronic transducers 12 or with the same optoelectronic transducers 12, for example with time division. In one embodiment, beam splitters 16 can be used to divide the beam in the channels, directing portions of beam towards the respective optical filters 14.

The optical filters 14 have passbands centred around respective wavelengths associated with lines characteristic of the spectrum of emission of radicals OH, CH, which are intermediate products of the combustion reaction, with a diffusion and premixed flame respectively. In particular, passbands B₁, B₂ of the optical filters 14 can be centred around the wavelengths of 308 nm and 430 nm respectively. The passbands B₁, B₂ can have for example a width of 10 nm and 10 nm respectively and, in one embodiment, they are separate and not overlapping.

In a different embodiment, which is not shown, there are no optical filters and the conversion of the intensity signals into electrical signals is carried out over the whole spectrum. In further embodiments, there can be optical filters that select the infrared and/or visible band, for example for pyrometry applications or for identifying characteristics of extension and symmetry of the flame area of the burners.

The monitoring apparatus 9 can also comprise piezoelectric transducers 17 that are configured to provide pressure monitoring signals S_{PM} indicative of the pressure inside the combustion chamber 5. The piezoelectric transducers 17 can be fluidly coupled to the inside of the combustion chamber 5 with pipes (not illustrated) or they can be housed in a plenum (also not shown) of the combustion chamber 5.

The controller 10 receives measurements of operating values from sensors on the gas-turbine unit 2 or coupled to it and the optical monitoring signals S_{OM} and pressure monitoring signals S_{PM} from the monitoring apparatus 9 (from the acquisition unit 13 and from the piezoelectric transducers 17 respectively). The controller 10 is configured to determine control signals S_{C} according to measurements of the operating values received and set points calculated or supplied from the outside. In particular, the controller 10 is configured to determine the control signals S_{C} according to the optical monitoring signals S_{OM}. The optical monitoring signals S_{OM} can be used on their own or, where appropriate, in conjunction with the pressure monitoring signals S_{PM}, which will be explained later on.

The control signals S_{C} are used to determine the operating conditions of the gas-turbine unit by actuator assemblies 18, which are not shown here in detail (for example, the control signals S_{C} can determine the degree of opening of the Inlet Guide Vanes, IGV, of the first compressor stage and regulating valves of the flow of fuel supplied to the burner assembly 8).

In one embodiment, the controller 10 comprises a first processing module 20, a second processing module 21 and a control module 22.

The first processing module 20 is configured to detect conditions of thermoacoustic instability inside the combustion chamber 5 based on the optical monitoring signals S_{OM} received from the acquisition unit 13. In one embodiment, the first processing module 20 can also use the pressure monitoring signals S_{PM} provided by the piezoelectric transducers 17 to identify correlations between light intensity fluctuations and pressure fluctuations with the aim of improving the identification of conditions of thermoacoustic instability and their criticality.

The second processing module 21 uses the optical monitoring signals S_{OM} to regulate operating parameters (for example gain parameters) for the acquisition unit 13.

The control module 22 is configured to determine the control signals S_{C} for the actuator assemblies 18 according to the measurements of the operating values received, including, in particular, the optical monitoring signals S_{OM} and the pressure monitoring signals S_{PM}.

More specifically, the first processing module 20 calculates the spectrum of the optical monitoring signals S_{OM} with Fourier's transform and monitors the content in frequency. For example, the first processing module 20 identifies any spectral components of amplitude greater than a threshold (TH in Figure 3) and provides the control module 22 with monitoring information I. The threshold may be determined according to the wavelength.

The presence of a spectral component with an amplitude greater than the threshold is indicative of a fluctuation related to heat release and consequently of a condition of potentially harmful instability.

In one embodiment, the first processing module 20 processes the optical monitoring signals S_{OM} of the channels associated with passbands B₁, B₂ of the optical filters 14 separately. In this way, it is possible to identify the origin of the incipient or manifested instability.

In one embodiment, the first processing module 20 identifies correlations between spectral components of the optical monitoring signals S_{OM} and the pressure monitoring signals S_{PM}. Basically, the first processing module 20 calculates the spectrum of the pressure monitoring signals S_{PM} and identifies any components greater than a threshold. The spectral components of the pressure monitoring signals S_{PM} are indicative of pressure fluctuations inside the combustion chamber 5. As discussed previously, the pressure fluctuations can be linked to the normal operation of the machine and are not always harmful. However, the presence of spectral components substantially of the same frequency in the optical monitoring signals S_{OM} and in the pressure monitoring signals S_{PM} indicates a high probability of a condition of thermoacoustic instability, wherein the heat release fluctuations and the pressure fluctuations strengthen each other. Phenomena of thermoacoustic instability should be avoided in general and must be contrasted with appropriate control action, which the control module 22 is configured to select on the basis of the monitoring information I provided by the first processing module 20.

The monitoring information I can be defined in the form of electric signals or messages containing, for example:
the frequencies and amplitudes of the spectral components of the optical monitoring signals S_{OM} identified;
the frequencies of the spectral components of the optical monitoring signals S_{OM} and the mutually correlated pressure monitoring signals;
where appropriate, a parameter indicative of the dangerousness of the fluctuations detected (the indicative parameter can be determined empirically on the basis of a case study and corrected according to the amplitudes of the fluctuations detected and the coupling between heat release fluctuations and pressure fluctuations).

The control module 22 is configured to determine the control signals S_{C} on the basis of detected plant quantities or indirectly through sensors, which are not shown, and on the basis of the monitoring information I provided by the first processing module 20. The control module 22 uses the control signals S_{C} to determine the operating state of the gas-turbine unit 2. Furthermore, the control module 22 uses the monitoring information I to carry out checks aimed at modifying the operating state to avoid the conditions that give rise to thermoacoustic fluctuations. The control action may affect indirectly the selection, for example, of load set-points or exhaust gases temperature set-points or directly the actuator assemblies 18 (in particular, the degree of opening of the IGV of the first compressor stage and the fuel flow supplied to the burner assembly 8 by the regulating valves).

For example, the control module 22 may be configured to determine control actions based on a ratio of radicals OH, CH as determined from the optical monitoring signals S_{OM}. In one embodiment, once thermoacoustic oscillation have been detected, based either on optical monitoring signals S_{OM} alone or on correlations between optical monitoring signals S_{OM} and pressure monitoring signals S_{PM}, the control module 22 determines a premix degree and an air-to-fuel ratio of the mixture supplied to the combustion chamber 5 for burning. If the control module 22 determines ratio of radicals OH, CH that the mixture is too lean (e.g. air-to-fuel ratio above a threshold), through a first set of control signals S_{C} the control module 22 requests that the balance of pilot (diffusion or partially premixed) flame and premixed flame (see also below) is modified without affecting the overall power delivery (namely, power associated with premixed flame is increased and power associated with pilot flame is reduced). Instead, if the air-to-fuel ratio lies within an acceptable range, the control module 22, through a second set of control signals S_{C}, the control module 22 causes the overall load and power delivery to be reduced, while not necessarily affecting the balance of pilot (diffusion or partially premixed) flame and premixed flame.

Optical detection of variations in light intensity associated with flame fluctuations make it advantageously possible to detect conditions of thermoacoustic instability accurately and in good time. This result cannot be obtained with piezoelectric transducers alone, which are unable to distinguish vibrations caused by thermoacoustic instability (potentially harmful) from pressure variations linked to the normal working of the machine. The combined use of optical monitoring and piezoelectric transducers offers better identification of conditions of thermoacoustic instability, correlating light intensity fluctuations and pressure fluctuations.

Furthermore, monitoring wavelength bands associated with lines characteristic of the spectrum of emission of the radicals OH, CH also makes it possible to identify whether the thermoacoustic fluctuations are caused by a diffusion flame (pilot) or premixed flame.

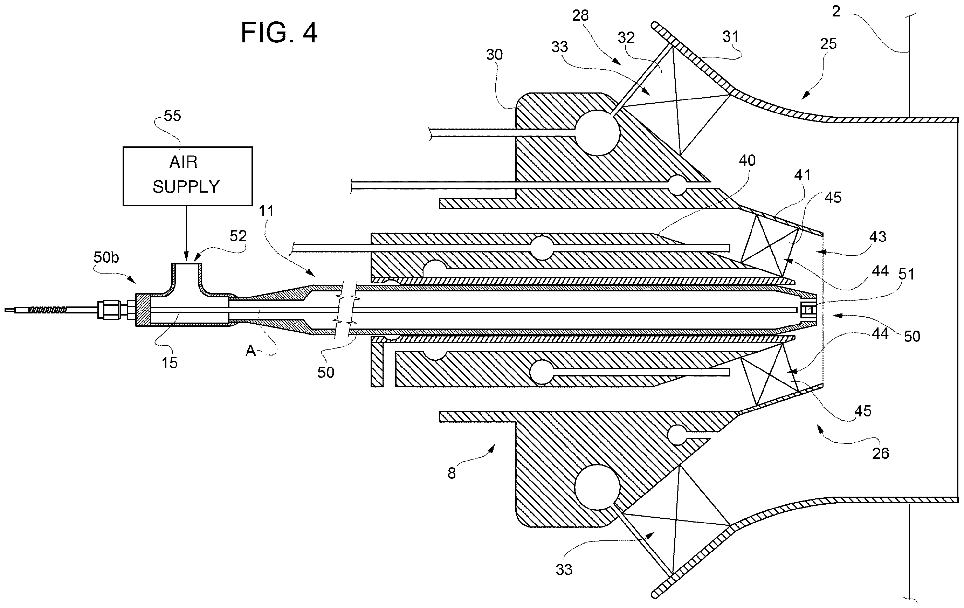

With reference to Figure 4, according to one embodiment, at least one burner assembly 8 is equipped with an optical probe 11. More specifically, the burner assembly 8 extends along an axis A, around which a main burner 25 is arranged on the outside and, centrally, a pilot burner 26. The optical probe 11 is inserted inside the pilot burner 26, again along axis A.

The premixing-type main burner 25 is arranged around the pilot burner 26 and provided with a swirler, which is indicated by number 28.

The swirler 28 is defined radially between a first frusto-conical body 30 and a substantially frusto-conical annular wall 31. The first frusto-conical body 30 presents a cylindrical axial cavity and it is also frusto-conical towards the outside. The swirler 28 also comprises a plurality of vanes 32, defining respective flow channels 33 to channel a flow of combustion air diagonally to the axis A, towards the combustion chamber 5.

The swirler 28 mixes the flow of fuel and air, which forms in the flow channels 33, with a greater quantity of air in relation to the theoretical stoichiometric ratio, to generate a premixing flame in excess of air.

The pilot burner 26 comprises a second frusto-conical body 40 and a third frusto-conical body 41 and an axial-type swirler 43 is defined between them. The second frusto-conical body 40 extends around axis A and presents a passing axial cavity, where the optical probe 11 is housed. The third frusto-conical body 41, which is hollow, is arranged around the second frusto-conical body 40, and it is coaxial to it and connected to the outer frusto-conical surface of the first frusto-conical body 30.

The swirler 43 comprises a plurality of vanes 45, which are arranged in the space between the second frusto-conical body 40 and the third frusto-conical body 41. Flow channels 44 are defined between pairs of adjacent vanes 45.

As stated previously, the optical probe 11 is housed along axis A, inside the second frusto-conical body 40 and comprises a tubular body 50. A first end 50a of the tubular body 50 is facing the combustion chamber 5, adjacent to the outlet of the pilot burner 26, and is provided with an optical window 51 defined by a sheet with parallel flat faces (detail in Figure 5) or a focusing lens (detail in Figure 6, where the optical window is indicated with 51'). The focusing lens can be a flat-convex lens, which broadens the vision angle of the optical probe 11 inside the combustion chamber 5. The optical window 51 is transparent at least in the bands B₁, B₂ of the optical filters 14 and, in one embodiment, it is transparent in a band of wavelengths from the infrared range to the ultraviolet range. The optical window 51 provides optical access to the flame area of both the main burner 25 and the pilot burner 26 and, at the same time, it protects the inside of the optical probe 11 both limiting exposure to high temperatures and preventing any return of hot gas. In one embodiment, the optical window 51 is made of sapphire or quartz.

An air intake 52, made on a second end 50b of the tubular body 50, opposite the first end 50a, is configured to feed a flow of cooling air inside the tubular body 50. The air intake 52 can be in communication with an air supply system 55 (only shown schematically here), which feeds combustion air to the burner assembly 8 of the gas-turbine unit. The cooling air can be made to flow both inside and outside the cylindrical body 30.

The optical probe 11 also comprises a portion of one of the waveguides 15, which is housed inside the tubular body 50 through the second end and extends to the optical window 51. The waveguide 15 is, therefore, optically facing the flame area both of the main burner 25 and the pilot burner 26.

At least the portion of the waveguide 15 housed inside the tubular body 50 is of a type resistant to high temperatures (for example up to 500°C).

Integrating the optical probe 11 in the burner assembly 8 is advantageous for a number of reasons. Firstly, the optical probe 11 is near the flame area and consequently the light radiation emitted during combustion (including bands B₁, B₂ and the spectrum from the infrared range to the ultraviolet range in general) is collected efficiently and with an elevated signal/noise ratio. Furthermore, it is not necessary to make special openings in the case of the combustion chamber 5, which is beneficial to both facilitating assembly and maintenance, and the structural resistance of the combustion chamber 5 itself.

Finally, variations and modifications can obviously be made to the burner assembly described, without going beyond the scope of the present invention, as defined in the accompanying claims.

## Claims

1. A burner assembly for a combustion chamber of a gas-turbine unit, comprising:
a main burner (25);
a pilot burner (26), arranged inside the main burner (25) and coaxial therewith; and
an optical probe (11), housed inside the pilot burner (26) and coaxial with the main burner (25) and with the pilot burner (26);
wherein the optical probe (11) comprises a tubular body (50), having an optical window (51; 51') at a first end (50a), and a portion of a waveguide (15) housed inside the tubular body (50) through a second end (50b) of the tubular body (50) and extending to the optical window (51; 51'), the waveguide (15) thus optically facing the flame area both of the main burner (25) and the pilot burner (26) ;
wherein the tubular body (50) comprises an air intake (52) at the second end (50b), the air intake (52) being configured to feed a flow of cooling air inside the tubular body (50).

2. The burner assembly according to claim 1, wherein the optical probe (11) is arranged so that a flame area is visible by the optical probe (11).

3. The burner assembly according to claim 1 or 2, wherein the optical window comprises a flat plate (51) or a plano-convex lens (51').

4. The burner assembly according to any one of the preceding claims, wherein the optical window (51; 51') is transparent in a band of wavelengths extending from the infrared range to the ultraviolet range.

5. The burner assembly according to any one of the preceding claims, wherein the optical window (51; 51') is adjacent to an outlet of the pilot burner (26).

6. The burner assembly according to any one of the preceding claims, wherein the main burner (25) is of premix-type and comprises:
a first frusto-conical body (30);
a substantially frusto-conical annular wall (31);
and a first swirler (28) radially defined between the first frusto-conical body (30) and the annular wall (31).

7. The burner assembly according to claim 6, wherein the pilot burner (26) comprises:
a second frusto-conical body (40);
a third frusto-conical body (41); and
a swirler (43) of axial type, defined between the second frusto-conical body (40) and the third frusto-conical body (41).

8. A gas-turbine plant comprising a combustion chamber (5) having at least one burner assembly (8) according to any one of the preceding claims.

## Patentansprüche

1. Brenneranordnung für eine Brennkammer einer Gasturbineneinheit, umfassend:
einen Hauptbrenner (25);
einen Zündbrenner (26), der in dem Hauptbrenner (25) und koaxial mit demselben angeordnet ist; und
eine optische Sonde (11), die in dem Zündbrenner (26) und koaxial mit dem Hauptbrenner (25) und mit dem Zündbrenner (26) aufgenommen ist;
wobei die optische Sonde (11) einen rohrförmigen Körper (50), der ein optisches Fenster (51; 51') an einem ersten Ende (50a) aufweist, und einen Abschnitt eines Wellenleiters (15), der in dem rohrförmigen Körper (50) durch ein zweites Ende (50b) des rohrförmigen Körpers (50) aufgenommen ist und sich zu dem optische Fenster (51; 51') erstreckt, umfasst, wobei der Wellenleiter (15) somit dem Flammenbereich sowohl des Hauptbrenners (25) als auch des Pilotbrenners (26) optisch zugewandt ist;
wobei er rohrförmigen Körper (50) einen Lufteinlass (52) an dem zweiten Ende (50b) umfasst, wobei der Lufteinlass (42) dafür konfiguriert ist, einen Strom an Kühlungsluft in den rohrförmigen Körper (50) zuzuführen.

2. Brenneranordnung nach Anspruch 1, wobei die optische Sonde (11) so angeordnet ist, dass ein Flammenbereich seitens der optischen Sonde (11) sichtbar ist.

3. Brenneranordnung nach Anspruch 1 oder 2, wobei das optische Fenster eine flache Platte (51) oder eine plankonvexe Linse (51') umfasst.

4. Brenneranordnung nach irgendeinem der vorangehenden Ansprüche, wobei das optische Fenster (51; 51') in einem Wellenlängenband durchlässig ist, dass vom Infrarotbereich in den Ultraviolettbereich reicht.

5. Brenneranordnung nach irgendeinem der vorangehenden Ansprüche, wobei sich das optische Fenster (51; 51') neben einem Auslass des Zündbrenners (26) befindet.

6. Brenneranordnung nach irgendeinem der vorangehenden Ansprüche, wobei der Hauptbrenner (25) einem Vormisch-Typ entspricht und umfasst:
einen ersten kegelstumpf-förmigen Körper (30);
eine im Wesentlichen kegelstumpf-förmige, ringförmige Wand (31) ;
und einen ersten Verwirbler (28), der zwischen dem ersten kegelstumpf-förmigen Körper (30) und der ringförmigen Wand (31) radial definiert ist.

7. Brenneranordnung nach Anspruch 6, wobei der Zündbrenner (26) umfasst:
einen zweiten kegelstumpf-förmigen Körper (40);
einen dritten kegelstumpf-förmigen Körper (41); und
einen Verwirbler (43) des Axial-Typs, der zwischen dem zweiten kegelstumpf-förmigen Körper (40) und dem dritten kegelstumpf-förmigen Körper (41) definiert ist.

8. Gasturbinenanlage, die eine Brennkammer (5) mit wenigstens einer Brenneranordnung (8) gemäß irgendeinem der vorangehenden Ansprüche umfasst.

## Revendications

1. Ensemble brûleur pour une chambre de combustion d'une unité de turbine à gaz, comprenant :
un brûleur principal (25) ;
un brûleur pilote (26), agencé à l'intérieur du brûleur principal (25) et coaxial à celui-ci ; et
une sonde optique (11), logée à l'intérieur du brûleur pilote (26) et coaxiale au brûleur principal (25) et au brûleur pilote (26) ;
dans lequel la sonde optique (11) comprend un corps tubulaire (50), ayant une fenêtre optique (51 ; 51') à une première extrémité (50a), et une partie d'un guide d'onde (15) logée à l'intérieur du corps tubulaire (50) à travers une seconde extrémité (50b) du corps tubulaire (50) et s'étendant vers la fenêtre optique (51 ; 51'), le guide d'onde (15) faisant ainsi face optiquement à la zone de flamme à la fois du brûleur principal (25) et du brûleur pilote (26) ;
dans lequel le corps tubulaire (50) comprend une admission d'air (52) au niveau de la seconde extrémité (50b), l'admission d'air (52) étant configurée pour fournir un flux d'air de refroidissement à l'intérieur du corps tubulaire (50).

2. Ensemble brûleur selon la revendication 1, dans lequel la sonde optique (11) est agencée de sorte qu'une zone de flamme est visible par la sonde optique (11).

3. Ensemble brûleur selon la revendication 1 ou 2, dans lequel la fenêtre optique comprend une plaque plate (51) ou une lentille plan-convexe (51').

4. Ensemble brûleur selon l'une quelconque des revendications précédentes, dans lequel la fenêtre optique (51 ; 51') est transparente dans une bande de longueurs d'onde s'étendant de la plage infrarouge à la plage ultraviolette.

5. Ensemble brûleur selon l'une quelconque des revendications précédentes, dans lequel la fenêtre optique (51 ; 51') est adjacente à une sortie du brûleur pilote (26).

6. Ensemble brûleur selon l'une quelconque des revendications précédentes, dans lequel le brûleur principal (25) est du type à prémélange et comprend :
un premier corps tronconique (30) ;
une paroi annulaire sensiblement tronconique (31) ; et une première coupelle rotative (28) définie radialement entre le premier corps tronconique (30) et la paroi annulaire (31).

7. Ensemble brûleur selon la revendication 6, dans lequel le brûleur pilote (26) comprend :
un deuxième corps tronconique (40) ;
un troisième corps tronconique (41) ; et
une coupelle rotative (43) de type axial, définie entre le deuxième corps tronconique (40) et le troisième corps tronconique (41).

8. Installation de turbine à gaz comprenant une chambre de combustion (5) ayant au moins un ensemble brûleur (8) selon l'une quelconque des revendications précédentes.
